**Europäisches Patentamt**

**European Patent Office**

**Office européen des brevets**

(19)

(11) Veröffentlichungsnummer: **0 000 754**
**B1**

(12)

# EUROPÄISCHE PATENTSCHRIFT

(45) Veröffentlichungstag der Patentschrift:
**07.01.81**

(51) Int. Cl.³: **F 02 C 7/04**, F 16 L 41/02

(21) Anmeldenummer: **78100542.6**

(22) Anmeldetag: **28.07.78**

(54) **Ansaugsystem für den Verdichter einer Gasturbine.**

(30) Priorität: **10.08.77 DE 2736074**

(43) Veröffentlichungstag der Anmeldung:
**21.02.79 Patentblatt 79/4**

(45) Bekanntmachung des Hinweises auf die Patenterteilung:
**07.01.81 Patentblatt 81/1**

(84) Benannte Vertragsstaaten:
**BE CH DE FR GB SE**

(56) Entgegenhaltungen:
**DE-A-1 481 518**
**DE-A-1 751 613**
**DE-U-7 417 306**
**DE-C-865 842**
**GB-A-1 150 815**
**GB-A-1 212 875**

(73) Patentinhaber: **KRAFTWERK UNION
AKTIENGESELLSCHAFT, c/o SIEMENS AG Postfach 261,
D-8000 München 22 (DE)**

(72) Erfinder: **Goebel, Konrad, Stettiner Strasse 5,
D-8520 Erlangen (DE)**

(74) Vertreter: **Mehl, Ernst, Dipl.-Ing., Postfach 22 01 76,
D-8000 München 22 (DE)**

Ansaugsystem für den Verdichter einer Gasturbine

Die Erfindung betrifft ein Ansaugluftleitungssystem für den hinter einer Nutzleistungsmaschine auf gleicher Welle angeordneten Verdichter einer Gasturbine mit einer neben der Nutzleistungsmaschine parallel zur Welle verlaufenden Luftführung, die über einen mit einem inneren und äusseren Kegelmantel versehenen, zur Welle hinführenden Übergangsteil mit einer im Querschnitt hohlzylindrischen, axialen Einlassöffnung des Verdichters verbunden ist.

Eine derartige Anordnung ist in dem deutschen Gebrauchsmuster 7417306 beschrieben. Hier ist als Nutzleistungsmaschine ein Generator vorgesehen, der von einem hohlzylindrischen Ringraum umgeben ist. Senkrecht von oben strömt die Ansaugluft über Schalldämpfer und Filter in diesen Hohlraum hinein, wo sie um 90° in Richtung der Turbinenachse umgelenkt und dem Ansaugquerschnitt des Verdichters über ein hohlkegelförmiges Übergangsteil zugeführt wird. Neben der notwendigen Umlenkung der Gase im Ansaugkanal um 90° ist bei dieser bekannten Lösung eine Strömungsbehinderung im Kanalteil unterhalb des Generatorfundamentes durch die dort notwendigen verdichterseitig gelegenen Fundamentstützen nicht zu vermeiden.

Aus der Zeitschrift «Aircraft Engineering», Band 36, Nr. 4, April 1964, Seite 94, ist es bekannt, für den Verdichter einer Gasturbine mit kreisringförmigem Eintrittsquerschnitt zwei im Querschnitt halbkreisförmige Einströmöffnungen vorzusehen, die von aussen kommend in einen Kreisringquerschnitt münden. Eine wesentliche Umlenkung der Gasströme in diesen Ansaugkanälen ist dabei nicht zu vermeiden. Ausserdem ergibt sich kein sich konisch verengender Querschnitt, und die Aussenwände sind mehrdimensional gekrümmt auszuführen.

Aufgabe der vorliegenden Erfindung ist es demgegenüber, ein Ansaugsystem anzugeben, das insbesondere für grosse stationäre Gasturbinenanlagen geeignet ist, Instabilitäten in der Luftströmung weitgehend ausschliesst und trotzdem einfache, leicht anzufertigende Querschnittsformen für die Ansaugkanäle besitzt. Bei der erfindungsgemässen Anordnung genügt es, zur Verminderung der radialen Einströmkomponente vor Eintritt in den Verdichter lediglich eindimensional gekrümmte Leitbleche vorzusehen.

Erfindungsgemäss wird diese Aufgabe dadurch gelöst, dass für die Luftführung zwei voneinander getrennte, seitlich parallel zur Wellenachse verlaufende Ansaugkanäle vorhanden sind, dass sich zwischen dem inneren Kegelmantel und dem äusseren Kegelmantel des Übergangsteils in Strömungsrichtung aufeinander zulaufende, eindimensional gekrümmte Leitbleche mit senkrechter Blechebene befinden, die sich vor der Einlassöffnung des Verdichters berühren und dort enden, und dass der Querschnitt jedes Ansaugkanals mindestens an der dem Übergangsteil zugewandten Seite an den durch den inneren und äusseren Kegelmantel und das senkrechte Leitblech begrenzten Eingangsquerschnitt des Übergangsteils angepasst ist.

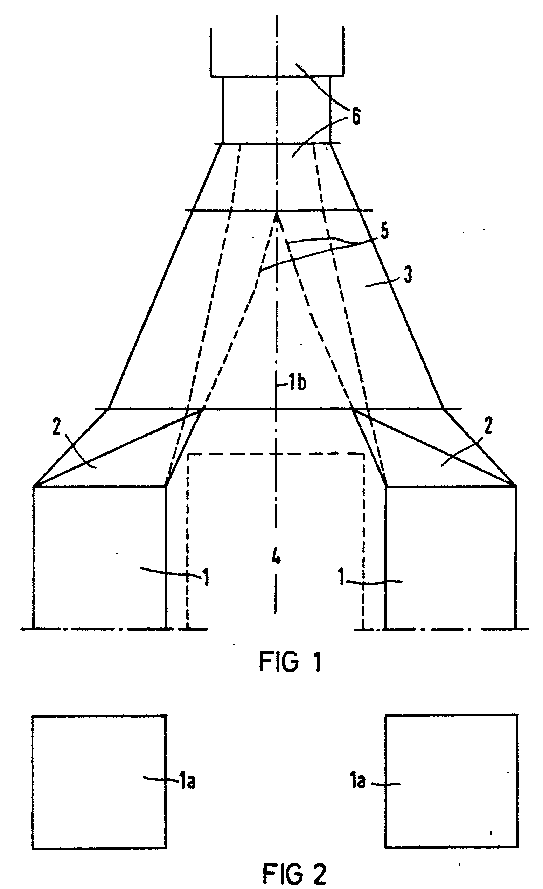

Ein Ausführungsbeispiel ist in Fig. 1 schematisch im Grundriss dargestellt.

Fig. 2 zeigt den Strömungsquerschnitt der Ansaugkanäle nach Fig. 1.

In den Fig. 3 bis 5 ist ein Übergangsteil in drei Ansichten dargestellt. Die Fig. 6 bis 9 stellen einen Überleitkanalteil zur Anpassung der Querschnitte der Ansaugkanäle an den Eingangsquerschnitt des Übergangsteils dar.

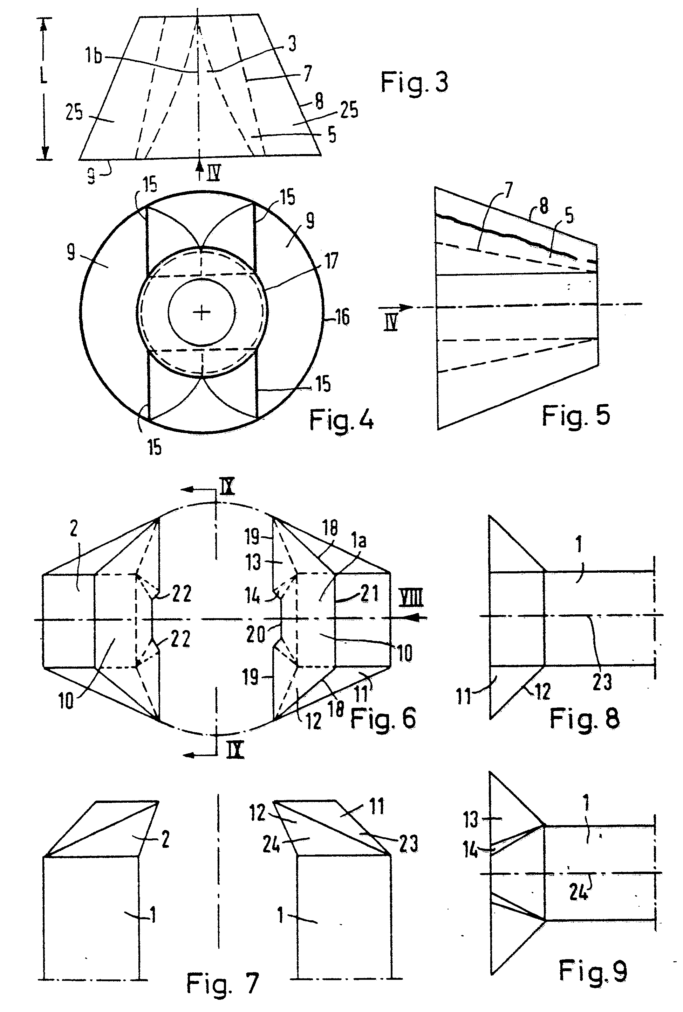

Hierbei zeigen die Fig. 6 und 7 zwei zueinander senkrechte Ansichten des Überleitkanalteils und die Fig. 8 und 9 Ansichten entsprechend der Pfeile VIII und IX.

In Fig. 1 ist eine Nutzleistungsmaschine 4 und der Verdichter 6 einer im einzelnen nicht dargestellten Gasturbine gemeinsam auf einer Welle hintereinander angeordnet. Die Wellenachse ist mit 1b bezeichnet. In Höhe und zu beiden Seiten der Wellenachse 1b befinden sich zwei Ansaugkanäle 1 mit rechteckigem Querschnitt 1a. Die Ansaugkanäle 1 laufen dabei parallel zur Wellenachse 1b. Sie können an ihrem eingangsseitigen Ende beispielsweise mit dem Ausgang eines nicht dargestellten Schalldämpfers sowie eines Luftfilters verbunden sein. An die ausgangsseitigen Enden der Ansaugkanäle 1 grenzt ein Überleitkanalteil 2 an, das den Querschnitt der beiden Ansaugkanäle an den Eingang eines Übergangsteils 3 anpasst. Das Übergangsteil 3 hat einen hohlzylindrischen Ausgangsquerschnitt und ist unmittelbar auf die Ansaugöffnung des Verdichters 6 aufgesetzt.

In dem Übergangsteil 3 werden die Halbströme des Gases aus den Ansaugkanälen 1 zusammengeführt, ohne dass unstetige Querschnittsveränderungen auftreten. Dieser Übergangsteil ist in den Fig. 3, 4 und 5 im einzelnen dargestellt. Er setzt sich aus drei Bauteilen zusammen:

Dem inneren Kegelmantel 7, durch welchen die Welle mit der Wellenachse 1b zur Verbindung der Nutzleistungsmaschine 4 mit dem Verdichter 6 geführt ist;

dem äusseren Kegelmantel 8 mit einem Neigungswinkel gegen die Turboachse von weniger als 30° und

den beiden Kegelmänteln 7, 8 in der Vertikalebene verbindenden Leitbleche 5, deren Eintrittskanten 15 in Fig. 4 sichtbar sind.

Die Kegelmäntel 7 und 8 schliessen einen hohlkegelförmigen Querschnitt ein, der durch die Leitbleche 5 in zwei Kanalhälften 25 mit den in Fig. 4 gezeigten Querschnittskonturen aufgeteilt ist. Die Querschnittskonturen bestehen aus den Eintrittskanten 15 der senkrechten Leitbleche 5, dem Teilkreis 17 des inneren Kegelmantels 7 und dem Teilkreis 16 des äusseren Kegelmantels 8.

Die Leitbleche 5 sind lediglich eindimensional gekrümmt. Die Krümmung der Leitbleche 5 ist so gewählt, dass die Querschnitte der Kanalhälften

beginnend vom Eintrittsquerschnitt 9 des Übergangsteils 3 sich in Richtung zum Austrittsquerschnitt stetig verkleinern. Hierdurch erfährt der Massenstrom des strömenden Gases eine zumindest konstante, vorzugsweise aber zunehmende Beschleunigung, ohne dass eine sprunghafte Geschwindigkeitsänderung auftritt.

Zur Anpassung der Querschnitte der Ansaugkanäle 1 an den Eintrittsquerschnitt 9 des Übergangsteils 3 ist zwischen den Ansaugkanälen 1 und dem Übergangsteil 3 ein Überleitkanalteil 2 angeordnet, das in Fig. 6 im Aufriss und in Fig. 7 im Grundriss dargestellt ist.

Fig. 6 zeigt die Form des Austrittsquerschnitts 10 des Überleitkanalteils 2, der an den Eintrittsquerschnitt 9 des Übergangsteils 3 anschliesst. Die Grösse der Querschnitte ist so gewählt, dass der Querschnitt 1a beider Ansaugkanäle 1 gleich gross oder grösser ist als die Austrittsquerschnitte 10 des Überleitkanalteils 2. Hierdurch wird auch im Bereich des Überleitkanalteils eine sprunghafte Verzögerung der Geschwindigkeit des Massenstromes vermieden. Der Austrittsquerschnitt 10 des Überleitkanalteils 2 wird von den Umrisskonturen 18, 19, 20, 21 und 22 gebildet.

Diese Umrisskonturen sind mit dem Querschnitt 1a der Ansaugkanäle 1 durch ebene Dreieckflächen 11, 12, 13 und 14 verbunden. Die Dreieckfläche 12 schliesst an die Kanaldecke und Kanalunterseite des Ansaugkanals 1 an. Die Dreieckfläche 1 (Fig. 8) schliesst oben und unten an die angewinkelte Aussenkanalwand 23 an und durch die Dreieckflächen 13 und 14 wird die ebenfalls angewinkelte Innenkanalwand 24 (Fig. 7 und 9) in die Umrisskonturen 19 und 22 des Austrittsquerschnittes 10 überführt.

Durch die geschilderte Ausbildung des Ansaugsystems werden damit unstetige Geschwindigkeitsänderungen und rechtwinklige Umlenkungen der strömenden Luft vermieden. Man erhält dadurch ein besonders gleichmässiges Potentialfeld am Eintritt des Verdichters 6, so dass ohne weiteres Verdichter mit transsonischen Beschaufelungen zur Anwendung kommen können, die in besonderem Masse empfindlich gegen eine unregelmässige Geschwindigkeitsverteilung des Gases vor Eintritt in die erste Verdichterstufe sind.

## Patentansprüche

1. Ansaugluftleitungssystem für den hinter einer Nutzleistungsmaschine auf gleicher Welle angeordneten Verdichter einer Gasturbine mit einer neben der Nutzleistungsmaschine parallel zur Welle verlaufenden Luftführung, die über einen mit einem inneren und äusseren Kegelmantel versehenen, zur Welle hinführenden Übergangsteil mit einer im Querschnitt hohlzylindrischen, axialen Einlassöffnung des Verdichters verbunden ist, dadurch gekennzeichnet, dass für die Luftführung zwei voneinander getrennte, seitlich parallel zur Wellenachse (1b) verlaufende Ansaugkanäle (1) vorhanden sind, dass sich zwischen dem inneren Kegelmantel (7) und dem äusseren Kegelmantel (8) des Übergangsteils (3) in Strömungsrichtung aufeinander zulaufende, eindimensional gekrümmte Leitbleche (5) mit senkrechter Blechebene befinden, die sich vor der Einlassöffnung des Verdichters (6) berühren und dort enden, und dass der Querschnitt jedes Ansaugkanals (1) mindestens an der dem Übergangsteil (3) zugewandten Seite an den durch den inneren und äusseren Kegelmantel (7, 8) und das senkrechte Leitblech (5) begrenzten Eingangsquerschnitt (9) des Übergangsteils (3) angepasst ist.

2. Ansaugsystem nach Anspruch 1, dadurch gekennzeichnet, dass die Ansaugkanäle (1) jeweils einen rechteckigen Querschnitt (1a) besitzen und dass ein Überleitkanalteil (2) zur Anpassung des Querschnittes zwischen den Ansaugkanälen (1) und dem Übergangskanalteil (3) vorgesehen ist.

3. Ansaugsystem nach Anspruch 1, dadurch gekennzeichnet, dass die Leitbleche (5) so gekrümmt sind, dass im Bereich des Übergangsteils ein sich stetig vermindernder Querschnitt in Strömungsrichtung vorhanden ist.

4. Ansaugsystem nach Anspruch 2, dadurch gekennzeichnet, dass der Überleitkanalteil (2) aus Blechen zusammengeschweisst ist, die jeweils ebene Dreieckflächen aufweisen.

## Claims

1. Air suction conveyor system for the compressor of a gas turbine, which compressor is arranged behind a useful power machine on the same shaft, with an air path which runs adjacent the useful power machine parallel to the shaft and which is connected via a transition component which is provided with an inner and outer conical casing and which leads to the shaft, to an axial inlet opening of the compressor which is of hollow cylindrical cross-section, characterised in that for the air path there are provided two separate suction channels (1) which run laterally parallel to the shaft axis (1b), in that between the inner conical casing (7) and the outer conical casing (8) of the transition component (3) there are arranged one-dimensionally curved baffle plates (5) with a vertical plane which plates approach one another in the flow direction and contact one another prior to the inlet opening of the compressor (6) where they terminate, and in that the cross-section of each suction channel (1), at least on the side facing towards the transition component (3) is adapted to that input cross-section (9) of the transition component (3) which is defined by the inner and outer conical casings (7, 8) and the vertical baffle plate (5).

2. Suction system as claimed in claim 1, characterised in that the suction channels (1) each have a rectangular cross-section (1a) and in that a converter channel component (2) is provided for adapting the cross-section between the suction channels (1) and the transition channel component (3).

3. Suction system as claimed in claim 1, characterised in that the baffle plates (5) are curved in such manner that a continuously reducing cross-section is provided in the flow direction in the region of the transition component.

4. Suction system as claimed in claim 2, characterised in that the converter channel component (2) is welded together from plates which each have flat triangular surfaces.

## Revendications

1. Système de conduites d'air d'aspiration pour le compresseur, disposé en aval d'une machine fournissant une puissance utile et sur le même arbre, d'une turbine à gaz comportant un dispositif de guidage de l'air, qui s'étend parallèlement à l'arbre à côté de la machine fournissant une puissance utile et qui est relié par l'intermédiaire d'une pièce de jonction, munie d'une enveloppe conique intérieure et d'une enveloppe conique extérieure et aboutissant à l'arbre et raccordé à une ouverture d'admission, axiale et en forme de cylindre creux en section transversale, du compresseur, caractérisé par le fait qu'il est prévu pour le guidage de l'air, deux canaux d'aspiration (1) séparés l'un de l'autre et s'étendant latéralement parallèlement à l'axe (1b) de l'arbre, qu'entre l'enveloppe conique intérieure (7) et l'enveloppe conique extérieure (8) de la pièce de jonction (3) sont situées des chicanes (5) convergentes suivant la direction de l'écoulement, cintrées suivant une dimension et disposées verticalement et qui se contactent en avant de l'ouverture d'admission du compresseur (6) et s'arrêtent à cet endroit, et que la section transversale de chaque canal d'aspiration (1) est adaptée, au moins sur le côté tourné vers la pièce de jonction (3), à la section transversale d'entrée (9) de la pièce de jonction (3), limitée par l'enveloppe conique intérieure et l'enveloppe conique extérieure (7, 8) ainsi que la chicane verticale (5).

2. Système d'aspiration suivant la revendication 1, caractérisé par le fait que les canaux d'aspiration (1) possèdent respectivement une section transversale rectangulaire (1a) et qu'il est prévu un élément de canal de transition (2) pour l'adaptation de la section transversale entre les canaux d'aspiration (1) et l'élément de canal de jonction (3).

3. Système d'aspiration suivant la revendication 1, caractérisé par le fait que les chicanes (5) sont cintrées de telle manière qu'au niveau de la pièce de jonction existe une section transversale qui diminue de façon monotone suivant la direction de l'écoulement.

4. Système d'aspiration suivant la revendication 2, caractérisé par le fait que l'élément de canal de transition (2) est constitué par un assemblage de tôles soudées qui possèdent respectivement des surfaces triangulaires planes.

FIG 1

FIG 2

Fig. 3

Fig. 4

Fig. 5

Fig. 6

Fig. 8

Fig. 7

Fig. 9